(19) Europäisches Patentamt
European Patent Office
Office européen des brevets

(11) Veröffentlichungsnummer : **0 127 740**
**B1**

(12) # EUROPÄISCHE PATENTSCHRIFT

(45) Veröffentlichungstag der Patentschrift : **28.05.86**

(51) Int. Cl.⁴ : **G 01 N 31/16**

(21) Anmeldenummer : **84103174.3**

(22) Anmeldetag : **22.12.80**

(60) Veröffentlichungsnummer der früheren Anmeldung nach Art. 76 EPÜ : **0035066**

(54) **Titrationsmittel zur Bestimmung geringer Wassermengen und Verfahren zu seiner Anwendung.**

(30) Priorität : **20.10.80 DE 3039511**

(43) Veröffentlichungstag der Anmeldung : **12.12.84 Patentblatt 84/50**

(45) Bekanntmachung des Hinweises auf die Patenterteilung : **28.05.86 Patentblatt 86/22**

(84) Benannte Vertragsstaaten : **AT BE CH DE FR GB IT LI LU NL SE**

(56) Entgegenhaltungen :
**DE-B- 1 086 918**
**FRESENIUS ZEITSCHRIFT FÜR ANALYTISCHE CHEMIE, Band 303, September 1980, Heidelberg, BRD; E. SCHOLZ: "Karl Fischer-Reagentien ohne Pyridin", Seiten 203-207**
**ANALYTICA CHIMICA ACTA, Band 94, 1977, Amsterdam, NL; J.C. VERHOEF et al.:"Mechanism and reaction rate of the Karl Fischer Titration Reaction", Seiten 395-403**

(73) Patentinhaber : **RIEDEL-DE HAEN AKTIENGESELLSCHAFT**
**Wunstorfer Strasse 40**
**D-3016 Seelze 1 (DE)**

(72) Erfinder : **Scholz, Eugen, Dr.**
**Silberweg 8**
**D-3008 Garbsen (DE)**

(74) Vertreter : **Beck, Bernhard et al**
**HOECHST AKTIENGESELLSCHAFT Zentrale Patentabteilung Postfach 80 03 20**
**D-6230 Frankfurt/Main 80 (DE)**

**EP 0 127 740 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Titrationsmittel zur Bestimmung geringer Wassermengen, das ein Amin, Schwefeldioxid und Jod sowie ein Lösungsmittel enthält, und seine Verwendung zur Bestimmung des Wassergehaltes von Festsubstanzen oder Flüssigkeiten.

Die maßanalytische Bestimmung des Wassergehaltes von Flüssigkeiten und festen Körpern wurde bekanntlich von Karl Fischer entwickelt ; sie beruht auf der Oxidation von Schwefeldioxid durch Jod in Gegenwart von Wasser nach der Gleichung

$$2\ H_2O + SO_2 + J_2 \rightleftharpoons H_2SO_4 + 2\ HJ,$$

und die Reaktion wird üblicherweise in wasserfreiem Methanol durchgeführt. Das Reagenz besteht aus einer Lösung von 790 g Pyridin, 192 g flüssigem Schwefeldioxid und 254 g Jod in 5 l wasserfreiem Methanol (vgl. Angew. Chemie *48* (1935), 394). Da diese Lösung nicht lagerstabil ist, wird in der Praxis meist ein Zweikomponentenreagenz verwendet, das einerseits aus einer Lösung von Schwefeldioxid und Pyridin in Methanol und andererseits aus einer Lösung von Jod in Methanol besteht.

Ferner ist bereits bekannt, daß an Stelle von Pyridin zwar auch andere Stickstoffbasen verwendet wurden, aber keine Vorteile zeigten, z. B. Chinolin, Anilin, Dimethylanilin, Tri-n-butylamin und Triethanolamin. Die Stabilität einiger mit diesen Basen hergestellter Reagenzien ist unzureichend ; das Triethanolamin enthaltende Reagenz zersetzt sich bereits bei der Herstellung. Das Molverhältnis von Pyridin zu Schwefeldioxid ist mindestens 3 : 1, und im Falle des Tri-n-butylamins sind nahezu 4 Mol notwendig (Vgl. J. Amer. Chem. Soc. 1939, 2407). Weitere Amine, die als Pyridin-Ersatz dienen sollten, sind Ethanolamin und Hexamethylentetramin ; diese Amine sollen jedoch den Nachteil haben, daß sie keinen stabilen Titrationspunkt anzeigen oder störende Ausfällungen verursachen (vgl. Analytic. Chem. *28* (1956), 1166). Dieses modifizierte KF-Reagenz diente zur Bestimmung von Wasser in Oxidationsmitteln, Reduktionsmittel und Aminen.

Weiterhin ist bekannt, daß stark basische Amine Pyridin in Karl-Fischer-Reagentien ersetzen können, wenn das Molverhältnis $SO_2$ : Amin mindestens 1 : 1 ist. Dabei wurden die aliphatischen Amine Morpholin, Diethanolamin und Isopropylamin verwendet. Die KF-Reagenzien wurden als Einkomponentenreagentien und insbesondere als Zweikomponentenreagentien verwendet (vgl. Fresenius Z. Anal. Chem. *303* (1980), 203).

Aufgabe der Erfindung ist nun die Bereitstellung eines Reagenzes, das zur Bestimmung geringer Wassermengen geeignet ist, an Stelle von Pyridin ein toxikologisch möglichst unbedenkliches Amin enthält und lagerstabil ist.

Die Erfindung betrifft ein Titrationsmittel zur Bestimmung geringer Wassermengen, enthaltend ein heterocyclisches Amin, Schwefeldioxid und Jod sowie einen wasserfreien, niedermolekularen Alkohol als Lösungsmittel, und ist dadurch gekennzeichnet, daß das Amin Imidazol, Thiazol, Pyrimidin, Triazin oder deren Substitutionsprodukt ist.

Die erfindungsgemäß als Aminbase im Titrationsmittel enthaltene heterocyclische Verbindung weist fünf oder sechs Ringglieder auf und ist gegebenenfalls substituiert, vorzugsweise mit 1, 2 oder 3 Alkylresten mit 1 bis 4 Kohlenstoffatomen oder mit 1, 2 oder 3 Phenylresten oder mit einer Benzogruppe. Das Molverhältnis von Amin zu Schwefeldioxid liegt normalerweise im Bereich von 10 : 1 bis 0,3 : 1, vorzugsweise von 2 : 1 bis 0,5 : 1.

Als heterocyclische Verbindung eignet sich insbesondere Imidazol oder ein substituiertes Imidazol, vorzugsweise eine Verbindung der Formel

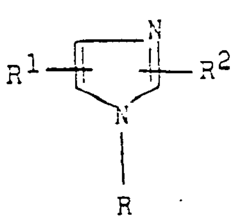

in der R, $R^1$ und $R^2$ gleich oder verschieden sind und jeweils ein Wasserstoffatom, einen niederen, vorzugsweise 1 bis 4 Kohlenstoffatome aufweisenden Alkylrest oder einen Phenylrest bedeuten.

Beispiele für erfindungsgemäß verwendete Verbindungen sind vor allem Imidazol, 1-Methylimidazol, 1-Ethylimidazol, 1-Propylimidazol, 1-Butylimidazol, 2-Methylimidazol, 2-Ethylimidazol, 2-Propylimidazol, 2-Butylimidazol, 4-Methylimidazol, 4-Butylimidazol, 1,2-Dimethylimidazol, 1,2,4-Trimethylimidazol, 1-Phenylimidazol, 2-Phenylimidazol und Benzimidazol, ferner Thiazol, 2-Methylthiazol, 2-Ethylthiazol, 4-Methylthiazol, 4-Ethylthiazol, 2-Phenylthiazol, 4-Phenylthiazol und Benzothiazol sowie Pyrimidin, 4-Methylpyrimidin, 4-Ethylpyrimidin, 1,3,5-Triazin und 1,2,4-Triazin.

Als Lösungsmittel für die Reaktionskomponenten des erfindungsgemäßen Titrationsmittels wird ein wasserfreier niedermolekularer Alkohol, vorzugsweise Methanol oder Ethylenglykolmonomethylether,

verwendet ; er wird in einer Menge von 2 bis 50 Mol, vorzugsweise 5 bis 20 Mol, verwendet (bezogen auf 1 Mol Amin).

Das Schwefeldioxid kann auch im Gemisch mit einer Säure, vorzugsweise einer Carbonsäure, eingesetzt werden. Das Molverhältnis von Schwefeldioxid zu Säure beträgt dabei 20 : 1 bis 1 : 5 und vorzugsweise 2 : 1 bis 1 : 2. Als Säuren sind beispielsweise Ameisensäure, Oxalsäure, Schwefelsäure, Jodwasserstoffsäure und insbesondere Essigsäure geeignet.

Das erfindungsgemäße Titrationsmittel wird hergestellt durch Lösen des Amins, Schwefeldioxids und Jods in dem Alkohol, gegebenenfalls unter Kühlung auf eine Temperatur von 15 bis 50 °C, vorzugsweise auf eine Temperatur von 20 bis 40 °C. Dabei beträgt die Menge des Amins 0,1 bis 10 Mol, vorzugsweise 0,5 bis 5 Mol, die Menge des Schwefeldioxids 0,1 bis 10 Mol, vorzugsweise 0,5 bis 3 Mol, und die Menge des Jods 0,01 bis 3 Mol, vorzugsweise 0,1 bis 1 Mol (jeweils bezogen auf einen Liter Lösung). Die Herstellung der Lösung erfolgt in üblicher Weise unter Ausschluß von Luftfeuchtigkeit mit gereinigten Ausgangsmaterialien.

Das erfindungsgemäße Titrationsmittel eignet sich hervorragend zur Bestimmung geringer Wassermengen nach der Karl-Fischer-Methode. Die Erfindung betrifft demnach auch ein Verfahren zur quantitativen Ermittlung geringer Wassermengen mit Hilfe eines Reagenzes, das ein heterocyclisches Amin, Schwefeldioxid und Jod sowie einen wasserfreien, niedermolekularen Alkohol als Lösungsmittel enthält, das dadurch gekennzeichnet ist, daß als Reagenz ein erfindungsgemäßes Titrationsmittel verwendet wird.

Mit Hilfe des erfindungsgemäßen Titrationsmittels wird der Wassergehalt von festen oder flüssigen Substanzen ermittelt, z. B. von anorganischen Salzen, organischen Lösemitteln, Fetten, Ölen, Lebensmitteln und pharmazeutischen Präparaten.

Das erfindungsgemäße Titrationsmittel ist durch eine hohe Lagerstabilität ausgezeichnet. Es eignet sich als Zweikomponenten-Reagenz und auch als Einkomponenten-Reagenz. Als Zweikomponenten-Reagenz besitzt es eine Lagerstabilität von mindestens zwei Jahren. Als Einkomponenten-Reagenz ist es etwa 1 Jahr stabil. Ein besonderer Vorteil des erfindungsgemäßen Titrationsmittels ist die Tatsache, daß es eine hohe Reaktionsgeschwindigkeit ermöglicht (vgl. Anwendungsbeispiel). Ferner zeichnet sich das Titrationsmittel dadurch aus, daß der Endpunkt der Titration beim Farbumschlag von farblos nach braun visuell gut erkennbar ist. Bei Verwendung in handelsüblichen Titrierautomaten mit voltametrischer Indikation oder Dead-stop-Indikation werden sehr stabile Endprodukte erhalten, wodurch eine hohe Genauigkeit der Wasserbestimmung gewährleistet ist. Das Titrationsmittel eignet sich auch als Elektrolyt für die coulometrische Wasserbestimmung.

Die folgenden Beispiele dienen zur Erläuterung der Erfindung. Der Verlauf der Titration nach den Anwendungsbeispielen a), b) und c) wird durch einen handelsüblichen Titrationsautomaten aufgezeichnet. Die erhaltenen Kurven sind in der Figur wiedergegeben. Kurve A zeigt die Titration gemäß Anwendungsbeispiel a), Kurve B diejenige gemäß Anwendungsbeispiel b) und Kurve C diejenige gemäß Anwendungsbeispiel c) (Vergleichsbeispiel).

### Beispiel 1

a) In 550 ml Methanol werden 200 g 2-Aminothiazol (2 mol) gelöst. Dann werden unter dauernder Kühlung auf eine Temperatur von 15 bis 20 °C 130 g gasförmiges Schwefeldioxid (2,03 mol) eingeleitet (Lösung A). Das Molverhältnis Thiazol : $SO_2$ beträgt 0,98 : 1.

b) 85 g (0,67 mol) Jod werden in 1 l Methanol gelöst (Lösung B).

c) Die Lösungen A + B bilden ein Zweikomponenten-Reagenz. Lösung A wird der Probelösung zugesetzt, und mit Lösung B wird titriert.

### Beispiel 2

a) In 700 ml Methanol werden unter Kühlung auf eine Temperatur von 20 °C zunächst 120 g (1,86 mol) Schwefeldioxid eingeleitet. Dann werden unter Rühren und Kühlen 300 g (3,65 mol) 2-Methylimidazol so langsam zugesetzt, daß die Temperatur nicht über 30 °C ansteigt. Das Molverhältnis Imidazol : $SO_2$ beträgt 1,96 : 1.

b) Lösung B entspricht der Lösung B aus Beispiel 1.

### Beispiel 3

In 700 g Ethylenglykolmonomethylether werden 204 g (3 mol) Imidazol gelöst. Dann werden 128 g (2 mol) Schwefeldioxid eingeleitet, wobei die Temperatur durch Kühlung zwischen 25 und 30 °C gehalten wird. Anschließend werden 100 g (0,8 mol) Jod zugesetzt. Das so erhaltene Einkomponentenreagenz ist ein Jahr lang verwendungsfähig.

Anwendungsbeispiel

a) 20 ml Methanol, das 40 mg Wasser enthält, werden mit dem nach Beispiel 2 erhaltenen

Titrationsmittel unter Verwendung eines handelsüblichen Titrierautomaten titriert. Die Titration ist nach 80 s beendet (vgl. Fig. Kurve A). Der Endpunkt der Titration kann auch visuell bestimmt werden, denn er wird durch einen Farbumschlag von farblos nach braun angezeigt.

b) Mit einer Lösung nach Beispiel 3 werden unter Verwendung eines Titriergerätes 40 mg Wasser titriert. Die Titration ist nach 190 s beendet und erreicht genau den Sollwert von 40 mg Wasser, der weitere 10 Minuten lang unverändert angezeigt wird (vgl. Fig. Kurve B).

c) 20 ml Methanol, das 40 mg Wasser enthält, werden unter Verwendung eines handelsüblichen Titrierautomaten mit einem bekannten KF-Reagenz, das pro Liter Ethylenglykolmonomethylether 250 g (3,16 mol) Pyridin, 90 g (1,40 mol) Schwefeldioxid und 140 g (1,10 mol) Jod enthält, titriert. Die Titration ist nur mit einem Titrierautomaten durchführbar, da sie keinen brauchbaren Farbumschlag am Äquivalenzpunkt zeigt. Die Titrationsdauer beträgt 545 s (vgl. Fig. Kurve C) ; der Endpunkt bleibt nicht konstant.

d) 20 ml Methanol, das 40 mg Wasser enthält, werden unter Verwendung eines handelüblichen Titrierautomaten mit einem bekannten KF-Reagenz, das pro Liter Methanol 700 g (8,85 mol) Pyridin, 81 g (1,27 mol) Schwefeldioxid und 130 g (1,02 mol) Jod enthält und ein Molverhältnis von Amin zu $SO_2$ von 7 : 1 aufweist, titriert. Die Titrierzeit beträgt 350 s.

## Patentansprüche

1. Titrationsmittel zur Bestimmung geringer Wassermengen, enthaltend ein heterocyclisches Amin, Schwefeldioxid und Jod sowie einen wasserfreien, niedermolekularen Alkohol als Lösungsmittel, dadurch gekennzeichnet, daß das Amin Imidazol, Thiazol, Pyrimidin, Triazin oder deren Substitutions : produkt ist.

2. Titrationsmittel nach Anspruch 1, dadurch gekennzeichnet, daß das Molverhältnis von Amin zu Schwefeldioxid im Bereich von 10 : 1 bis 0,3 : 1 liegt.

3. Titrationsmittel nach Anspruch 1, dadurch gekennzeichnet, daß das Amin mit 1, 2 oder 3 Alkylresten mit 1 bis 4 Kohlenstoffatomen oder mit 1, 2 oder 3 Phenylresten oder mit einer Benzogruppe substituiert ist.

4. Titrationsmittel nach Anspruch 1, dadurch gekennzeichnet, daß das Schwefeldioxid im Gemisch mit einer Säure vorliegt, wobei das Molverhältnis von Schwefeldioxid zu Säure 20 : 1 bis 1 : 5 beträgt.

5. Titrationsmittel nach Anspruch 4, dadurch gekennzeichnet, daß die Säure eine Carbonsäure ist.

6. Verfahren zur quantitativen Ermittlung geringer Wassermengen nach der Karl-Fischer-Methode mit Hilfe eines Reagenzes, das ein heterocyclisches Amin, Schwefeldioxid und Jod sowie einen wasserfreien niedermolekularen Alkohol als Lösungsmittel enthält, dadurch gekennzeichnet, daß als Reagenz ein Titrationsmittel gemäß einem der vorhergehenden Ansprüche verwendet wird.

7. Verwendung eines Titrationsmittels gemäß einem der Ansprüche 1 bis 5 als Elektrolyt für die coulometrische Wasserbestimmung.

## Claims

1. Titration agent for the determination of small amounts of water, containing a heterocyclic amine, sulfur dioxide and iodine as well as a waterfree low molecular weight alcohol as solvent, characterized in that the amine is imidazole, thiazole, pyrimidine, triazine or a substitution product thereof.

2. Titration agent according to claim 1, characterized in that the molar ratio of amine to sulfur dioxide is in the range of from 10 : 1 to 0.3 : 1.

3. Titration agent according to claim 1, characterized in that the amine is substituted with 1, 2 or 3 alkyl groups having 1 to 4 carbon atoms or with 1, 2 or 3 phenyl groups or with a benzo group.

4. Titration agent according to claim 1, characterized in that the sulfur dioxide is present in admixture with an acid, the molar ratio of sulfur dioxide to acid being from 20 : 1 to 1 : 5.

5. Titration agent according to claim 4, characterized in that the acid is a carboxylic acid.

6. Process for the determination of small amounts of water according to the Karl Fischer method with the aid of a reagent, which contains a heterocyclic amine, sulfur dioxide and iodine as well as a waterfree low molecular weight alcohol as solvent, characterized in that as reagent there is used a titration agent according to one of the preceding claims.

7. Use of a titration agent according to one of the claims 1 to 5 as electrolyte for the coulometric determination of water.

## Revendications

1. Réactif de titrage pour le dosage de faibles quantités d'eau, réactif qui contient une amine hétérocyclique, de l'anhydride sulfureux, de l'iode et, comme solvant, un alcool anhydre à bas poids moléculaire et qui est caractérisé en ce que l'amine est l'imidazole, le thiazole, la pyrimidine, une triazine ou un produit de substitution d'une de ces amines hétérocycliques.

2. Réactif de titrage selon la revendication 1, caractérisé en ce que le rapport molaire de l'amine à l'anhydride sulfureux est compris entre 10 : 1 et 0,3 : 1.

3. Réactif de titrage selon la revendication 1, caractérisé en ce que l'amine porte 1, 2 ou 3 radicaux alkyles en $C_1$-$C_4$, ou 1, 2 ou 3 radicaux phényles, ou un radical benzo.

4. Réactif de titrage selon la revendication 1, caractérisé en ce que l'anhydride sulfureux est sous la forme d'un mélange avec un acide, le rapport molaire de l'anhydride sulfureux à l'acide étant compris entre 20 : 1 et 1 : 5.

5. Réactif de titrage selon la revendication 4, caractérisé en ce que l'acide est un acide carboxylique.

6. Procédé pour la détermination quantitative de faibles quantités d'eau par la méthode de K. Fischer au moyen d'un réactif contenant une amine hétérocyclique, de l'anhydride sulfureux, de l'iode et, comme solvant, un alcool anhydre à bas poids moléculaire, procédé caractérisé en ce qu'on utilise un réactif de titrage selon l'une quelconque des revendications précédentes.

7. Application d'un réactif de titrage selon l'une quelconque des revendications 1 à 5 comme électrolyte pour le dosage de l'eau par coulométrie.

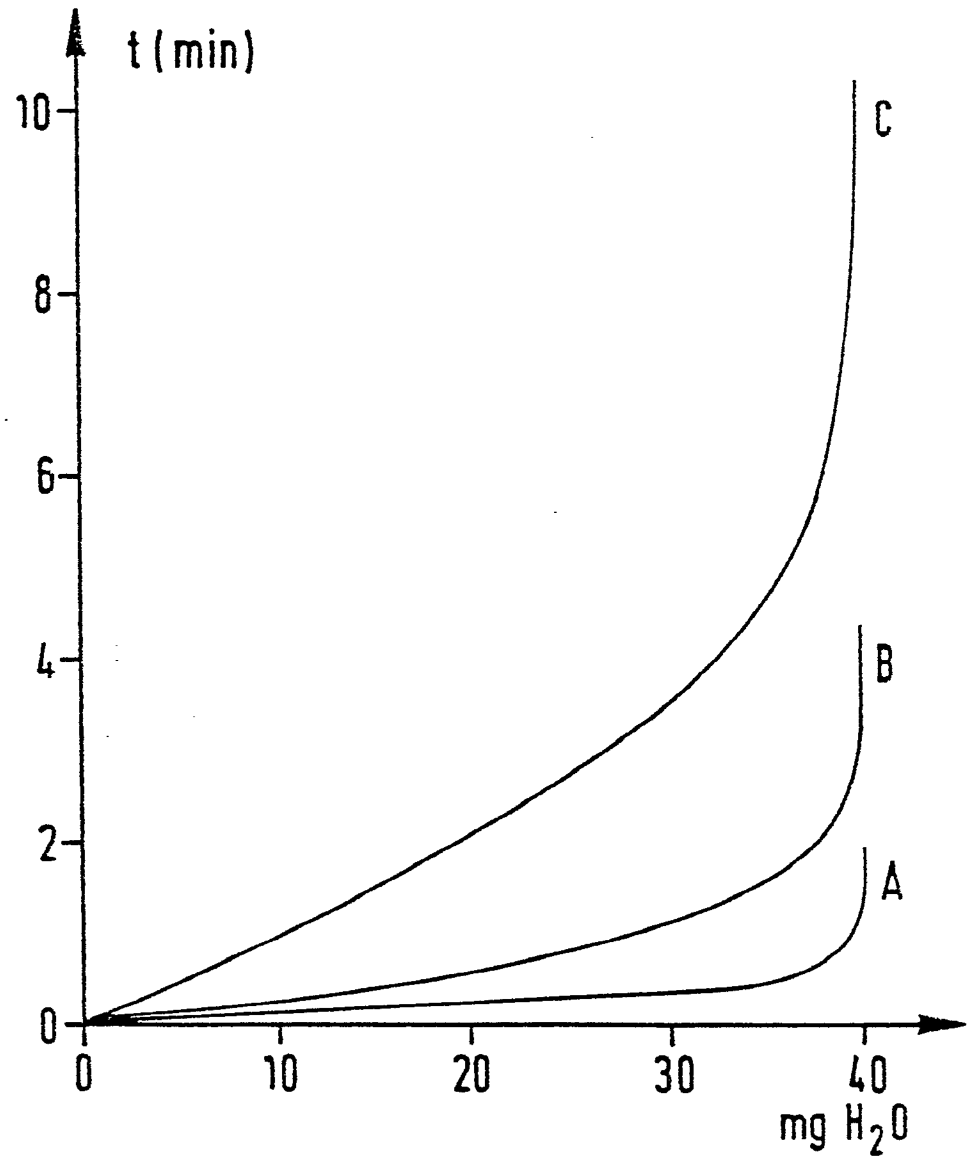
t (min)
10
8
6
4
2
0
C
B
A
0
10
20
30
40
mg $H_2O$